# EUROPÄISCHE PATENTSCHRIFT

(11) **EP 3 040 445 B1**
(45) Veröffentlichungstag und Bekanntmachung des Hinweises auf die Patenterteilung: **06.02.2019**
(21) Anmeldenummer: 14200636.0
(22) Anmeldetag: 30.12.2014
(51) Int. Cl.: C23C 22/06, B05D 7/16, C23C 22/40, C23C 22/42, C23C 22/46, C23C 22/83, C01B 33/32, C23C 22/53

(54) **Passivierungszusammensetzung aufweisend eine silanmodifizierte Silikatverbindung**
Passivation composition with a silane-modified silicate compound
Composition de passivation comprenant un composé de silicate modifié par un silane

(43) Veröffentlichungstag der Anmeldung: 06.07.2016
(73) Patentinhaber: EWALD DÖRKEN AG, 58313 Herdecke (DE)
(72) Erfinder: MÜLLER, Melanie, 58119 Hagen (DE); ROTH, Marcel, 40589 Düsseldorf (DE); KLÜPPEL, Ingo, 44791 Bochum (DE)
(74) Vertreter: Von Rohr Patentanwälte Partnerschaft mbB

(56) Entgegenhaltungen:
- WO-A1-2014/082287
- WO-A2-02/38686
- WO-A2-2006/079516
- DE-A1- 19 814 605
- JP-A- 2008 019 492
- KR-B1- 100 573 586

## Beschreibung

Die Erfindung betrifft eine Passivierungszusammensetzung, die silanmodifizierte Silikatverbindungen enthält sowie ein Verfahren zum Herstellen eines silanmodifizierten Silikats und ein mit dieser Passivierungszusammensetzung beschichtetes metallisches Substrat.

In bekannten Passivierungszusammensetzungen zur antikorrosiven Beschichtung metallischer Substrate werden häufig Silikate und Silane eingesetzt. Es hat sich herausgestellt, dass silanmodifizierte Silikatverbindungen besser geeignet sind für antikorrosive Beschichtungen als eine Mischung der einzelnen Silane und Silikate. Silanmodifizierte Silikatverbindungen, die durch alkalische Hydrolyse des monomeren Silans in silikatischen Lösungen z. B. in Wassergläsern erhalten wurden, werden - wie in der EP 2 216 371 A1 gelehrt wird, im alkalischen Bereich aufgetragen. Saure, kolloidale Silkapartikel enthaltende Beschichtungen werden durch saure Hydrolyse von Silananen in sauren Silikasolen erhalten.

Silanmodizierte Silikatverbindungen, die durch saure Hydrolyse des Silans in Gegenwart eines Silikats erhalten wurden, sind in WO2014/082287 A1 und WO2006/079516 A2 offenbart. Die DE 198 14 605 A1 offenbart, je nach verwendeter Silikatverbindung, eine Hydrolyse im Alkalischen oder im Sauren.

Die KR 100 573 586 B1 bzw. KR 10 2005 005 9816 A offenbart eine Hydrolyse von Silanen und Silikaten im stark sauren und eine nachfolgende Einstellung der Passivierungszusammensetzung auf einen weniger sauren pH-Wert. Mit Wassergläsern ist jedoch eine Hydrolyse im Sauren selbst bei nachfolgend weniger saurer pH-Wert-Einstellung nicht möglich, da die Silikate ausflocken würden. Keine der aus dem Stand der Technik bekannten Alternativen schöpft vollständig die mögliche antikorrosive Wirkung von silanmodifizierten Silikatverbindungen aus. Es ist daher Aufgabe der Erfindung, eine verbesserte Passivierungszusammensetzung, hergestellt unter Verwendung silanmodifzierter Silikatverbindungen und ein verbessertes Verfahren zur Herstellung silanmodifizierter Silikatverbindungen vorzuschlagen.

Die erfindungsgemäße Passivierungszusammensetzung für ein metallisches Substrat, aufweisend eine im alkalischen pH-Bereich silanmodifizierte Silikatverbindung in saurer wässriger Lösung, ist erhältlich durch mindestens teilweises Hydrolysieren und/oder Kondensieren mindestens eines Silans in Gegenwart mindestens eines Silikats bei einem pH-Wert gleich oder größer 8, und anschließendes Einstellen eines pH-Werts gleich oder kleiner 7 durch Zugeben von Säure.

Erfindungsgemäß wird das Verfahren zum Herstellen eines silanmodifizierten Silikats mit den Schritten durchgeführt, die umfassen ein mindestens teilweises Hydrolysieren eines Silans in Gegenwart einer Silikatverbindung und ein mindestens teilweises Kondensieren des hydrolysierten Silans mit dem Silikat bei einem pH-Wert gleich oder größer 8 zu einem silanmodifizierten Silikat sowie anschließend ein Einstellen eines pH-Werts gleich oder kleiner 7 durch Zugeben von Säure.

Es hat sich im Rahmen der Arbeiten zur Erfindung herausgestellt, dass die durch alkalische Hydrolyse entstehenden silanmodifizierten Silikatverbindungen eine ausgezeichnete antikorrosive Wirkung haben. Das Silan bzw. Siloxan wird durch Hydrolyse und/oder Kondensation im alkalischen Milieu als kovalente Seitenkette an das Silikat gebunden. Soweit im Zusammenhang mit der Beschreibung dieser Erfindung die Begriffe Hydrolyse und Kondensation auch einzeln verwendet werden, bezeichnen sie jeweils sämtliche bei der Herstellung der silanmodifizierten Silikatverbindung ablaufenden Reaktionen. Die antikorrosive Wirkung entfaltet sich aber noch nicht vollständig, wenn die Passivierungszusammensetzung mit diesen alkalisch hydrolysierten silanmodifizierten Silikatverbindungen auch mit alkalisch eingestelltem pH-Wert auf das metallische Substrat aufgetragen wird. Folgt jedoch auf die teilweise oder vollständige Hydrolyse bzw. Kondensation im alkalischen Milieu das erfindungsgemäße Absäuern auf einen pH-Wert gleich oder kleiner 7, dann zeigt sich eine nochmals verbesserte antikorrosive Wirkung einer sauren, wässrigen Passivierungszusammensetzung, die im Alkalischen mit Silan modifizierte Silikate aufweist.

Ein unerwarteter Effekt der Erfindung ist es, dass Wassergläser, die im Alkalischen mit einem Silan oder Siloxan oder deren Mischungen hydrolysiert oder kondensiert werden, auf einen pH-Wert von 7 oder weniger angesäuert werden können, ohne dass es zu Ausfällungen von Wasserglas kommt. Besonders deutlich zeigt sich dies beim Einsatz von Lithiumsilikat bzw. Lithiumpolysilikat und beim Einsatz einer Mischung von Wassergläsern, die Lithiumsilikat bzw. Lithiumpolysilikat enthalten. Die Passivierungszusammensetzung, die die erfindungsgemäß im Alkalischen durch Hydrolyse und/oder Kondensation des Silans erzeugte silanmodifizierte Silikatverbindung in Mischung mit Säure enthält, kann bei pH-Werten von pH 7 oder niedriger, typischerweise bei sauren pH-Werten von maximal pH 6 oder von bis zu pH 5 als wirksame Korrosionsschutzbeschichtung eingesetzt werden. Bevorzugt wird beim Ansäuern ein pH-Wert zwischen 2 und 4 eingestellt, der erreicht und gehalten werden kann, ohne dass es zum Ausfällen oder Ausflocken der silanmodifizierten Silikatverbindung kommt.

Als ein möglicher Grund für den verbesserten Korrosionsschutz, der mit der erfindungsgemäßen sauren, wässrigen Passivierungszusammensetzung erreicht wird, kann angesehen werden, dass die erfindungsgemäße saure Passivierungszusammensetzung die Metalloberfläche des Substrats anbeizt, wonach gelöste Metallionen aus der Oberfläche des Substrats in die Passivierung eingebaut werden. Solche Metallionen können in der Passivierungsschicht z.B. mittels GD-OES (Glimmentladungs - optische Emissionspektroskopie) nachgewiesen werden, z. B. Zink-, Eisen und/oder Magnesium-Ionen, die in Form von Zink-, Eisen und/oder Magnesiumsilikat nachweisbar sind. Das Anbeizen der Metalloberfläche des Substrats, das durch die Säure der erfindungsgemäßen Passivierungszusammensetzung erfolgt, schafft eine chemisch definierte Oberfläche und kann durchaus als saurer Reinigungsschritt verstanden werden. Zudem wird die Metalloberfläche nivelliert und die Haftung der Passivierungsschicht wird verbessert.

Eine vorteilhafte Wirkung zeigt sich bereits, wenn nur eine teilweise Hydrolyse bzw. Kondensation von Silan in Gegenwart von Silikat in wässriger Lösung im Alkalischen erfolgt. Häufig wird die Hydrolyse bzw. Kondensation von Silan in Gegenwart von Silikat zu einer silanmodifizierten Silikatverbindung jedoch vollständig im Alkalischen durchgeführt. Eine teilweise Hydrolyse von Silan und Silikat in wässriger alkalischer Lösung kann nach dem Ansäuern auf einen pH-Wert von 7 oder kleiner fortgesetzt werden, falls gewünscht bis hin zur vollständigen Hydrolyse. Die Erfindung erlaubt also eine variantenreiche Verfahrensführung, so dass die silanmodifizierten Silikatverbindungen jeweils individuell an die Anforderungen der Passivierungszusammensetzung angepasst werden können.

Das Einstellen eines pH-Wertes von 7 oder kleiner, also eines sauren pH-Wertes, erfolgt für die erfindungsgemäße Passivierungszusammensetzung durch Zugabe von Säure zu der wässrigen alkalischen Lösung, die vollständig oder teilweise hydrolysierte bzw. kondensierte, silanmodifizierte Silikatverbindungen enthält. Das Einstellen des pH-Wertes kann mit anorganischen oder mit organischen Säuren oder mit einer Mischung von Säuren erfolgen. Der pH-Wert nach dem Zusetzen von Säure wird vorzugsweise auf einen Wert zwischen pH 2 und pH 5 eingestellt. Bevorzugt werden zum Ansäuern Säuren eingesetzt, die Phosphor enthalten, wie z. B. Diphosphorsäure, Phosphonsäuren oder Dihosphonsäuren oder eine Mischung dieser Säuren. Vorteilhaft ist z. B. der Einsatz von (1-Hydroxyethan-1,1-diyl) Biphosphonsäure, 2-Phosphonbutanel 1,2,4-tricarboxylsäure, Aminotrimethylenphosphonsäure, Ethylendiamintetramethylenphosphonsäure, Hexamethylendiamintetramethylenphsphonsäure, Hydroxyethylaminodimethylenphosphonsäure, 2-Phosphonobutan-1,2,3-tricarbonsäure, Bishexamethylentriaminpentamethylenphosphonsäure, Diethylentriaminpentamethylenphosphonsäure oder 1-Hydroxyethan-(1,1-diphosphonsäure) [HEDP], deren Mischungen oder deren Mischung mit Phosphor- oder Phosphonsäure. Die Verwendung dieser Säuren in der erfindungsgemäßen Passivierungszusammensetzung wirken sich positiv auf die antikorrosive Wirkung aus. Alternativ oder in Mischung mit Phosphor enthaltenden Säuren können anorganische Säuren wie Salpetersäure oder Schwefelsäure eingesetzt werden, aber auch organische Säuren wie z.B. Essigsäure, Acrylsäure, Oxalsäure, Zitronensäure, Fumarsäure, Benzoesäure, Bernsteinsäure, Maleinsäure, Salicylsäure, Aminosalicylsäure, Nicotinsäure, Ameisensäure, Apfelsäure, Weinsäure, Ascorbinsäure, Propansäure, Milchsäure, Phthalsäure. Nach einer besonders vorteilhaften Ausführung des erfindungsgemäßen Verfahrens erfolgt das Ansäuern in Abstimmung auf das metallische Substrat auf einen für dieses Substrat optimalen pH-Wert. Dieses materialspezifische Optimum lässt sich mit wenigen orientierenden Versuchen ermitteln.

Zur Herstellung der erfindungsgemäßen wässrigen, sauren Passivierungszusammensetzung ist die Verwendung von Lithiumpolysilikat besonders bevorzugt. Wird Lithiumpolysilikat in wässriger Lösung zur Herstellung einer silanmodifizierten Silikatverbindung eingesetzt, stellt sich ohne weiteres Zutun ein alkalischer pH-Wert oberhalb von pH 9 bis pH 12 ein, der für eine teilweise oder vollständige Hydrolyse im Alkalischen völlig ausreicht. Aber auch Wassergläser wie Natrium-, NH₄- und/oder Kaliumsilikat sind geeignet, sowohl für sich oder in Mischung miteinander, aber gerade auch in Mischung mit Lithiumpolysilikat für das erfindungsgemäße Verfahren und zur Herstellung der erfindungsgemäßen Passivierungszusammensetzung verwendet zu werden.

Zur Herstellung der erfindungsgemäßen silanmodifizierten Silikatverbindungen, die in der Passivierungszusammensetzung eingesetzt wird, wird vorteilhaft ein epoxyfunktionelles, phenoxyfunktionelles, vinylfunktionelles oder aminofunktionelles Silan eingesetzt. Insbesondere Alkylalkoxysilane, hier: Mono-, Di- oder Trialkylalkoxysilane, sind einzeln oder in Mischung in Verbindung mit Silikaten geeignet, einen korrosionsschützenden Überzug aufzubauen. Besonders bevorzugt wird der Einsatz von Silanen, die mindestens eine Si-C-Bindung, also eine Bindung zwischen einem Silizium- und einem Kohlenstoffatom aufweisen. Verschiedene Silane können miteinander in Mischung eingesetzt werden. Besonders geeignete Silane sind Methacryloxymethyltrimethoxysilan, Methacryloxymethyltriethoxysilan, 3-aminopropylmethyldimethoxy silan, 3-aminopropyltriethoxysilan, N-(2-aminoethyl)-3-aminopropylmethyldimethoxy silan sowie 3-Mercaptopropyltrimethoxysilan, N-(2-Aminoethyl)-3-aminopropyltrimethoxysilan, N-(2-Aminoethyl)-3-aminopropyltrimethoxysilan, N-Cyclohexyl-3-aminopropyltrimethoxysilan, N-Cyclohexylaminomethyltriethoxysilan, 3-Aminopropyltriethoxysilan, 3-(2-Aminomethylamino)propyltriethoxysilan, N-(2-Aminoethyl)-3-aminopropylmethyldimethoxysilan, 3-Aminopropyltrimethoxysilan, 3-Ureidopropyltrimethoxysilan, Vinyltrimethoxysilan, Vinyldimethoxymethylsilan, Vinyltriethoxysilan, Vinyltriacetoxysilan, 3-Methacryloxypropyltrimethoxysilan, Methacryloxymethyl)methyldimethoxysilan, Methacryloxymethyltrimethoxysilan, 3-Methacryloxypropyltriacetoxysilan, N-Methyl[3-(Trimethoxysilyl)propyl]carbamat, N-Trimethoxysilylmethyl-O-methylcarbamat, N-Dimethoxy(methyl)silylmethyl-O-methylcarbamat, Tris-[3-(trimethoxysilyl)propyl]-isocyanurat, 3-Glycidoxypropyltrimethoxysilan, 3-Glycidoxypropyltriethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Cyclohexyl)methyldimethoxysilan, Dicyclopentyldimethoxysilan, Phenyltriethoxysilan, Triacetoxyethylsilan, 1,2-Bis(triethoxysilyl)ethan.

Das Silan wird entweder einzeln oder in Mischung mit anderen Silanen verwendet. Bevorzugt wird das Silan als Monomer eingesetzt, es kann aber auch ein Oligomer, d. h., Siloxan eingesetzt werden oder es kann eine Mischung aus Silan und Siloxan in Gegenwart eines Silikats oder einer Mischung von Silikaten hydrolysiert und/oder kondensiert werden. Sofern im Zusammenhang mit dieser Erfindung silanmodifizierte Silikate erwähnt oder beschrieben werden, ist daher stets auch die Verwendung von siloxanmodifizierten Silikaten mit gemeint und erfasst. Die silanmodifizierten oder siloxanmodifizierten Silikate sind mit gängigen analytischen Methoden sowohl in der wässrigen Passivierungszusammensetzung als auch als getrocknete Beschichtung auf dem metallischen Substrat nachweisbar, typisch z. B. mit Ionenchromatographie, Gelfiltrationschromatographie, Infrarot-, Massen- oder mittels NMR-Spektroskopie. Insbesondere kovalente Si-O-Si-R-Bindungen (Si: Silizium, O: Sauerstoff, R= Wasserstoff oder organischer Rest) im silanmodifizierten silikatischen Grundgerüst detektiert werden.

Die Herstellung von silanmodifizierten Silikaten durch Hydrolyse bzw. Kondensation im alkalischen pH-Bereich kann nach einer alternativen Ausführung auch in der Weise erfolgen, dass Oligomere oder Polymere eingesetzt werden, die über reaktive organische Seitengruppen miteinander vernetzten Silanen aufweisen. Diese Oligomere oder Polymere, die zur Modifikation der Silikate eingesetzt werden, tragen 1 bis 3 reaktive organische Seitengruppen, bevorzugt nur eine reaktive Seitengruppe. Im Übrigen weisen diese Oligomere oder Polymere, die aus Silanen aufgebaut sind, andere Seitengruppen, bevorzugt Alkoxy- oder Silanolgruppen auf. Die bevorzugte reaktive Gruppe der Seitengruppen ist ausgewählt aus der Gruppe, die umfasst Epoxy-, Amin-, Acrylat-, Isocyanat-, Alkohol-, Säure- oder Esthergruppen. Es können auch Mischungen von Oligomeren oder Polymeren aus Silan mit unterschiedlichen der vorgenannten reaktiven Gruppen der Seitenketten eingesetzt werden. Über die Seitengruppe kann auch vernetzt werden, wenn Doppel- und Dreifachbindungen vorhanden sind. Wenn ein Silikat mit einem Oligomeren oder Polymeren auf Basis eines Silans modifiziert werden soll, empfiehlt es sich, zunächst das Oligomer oder Polymer durch Hydrolyse oder Kondensation der Silane herzustellen und anschließend die alkalische Hydrolyse oder Kondensation zur Herstellung der silanmodifizierten Silikate in Gegenwart des Silikats, bevorzugt Lithiumpolysilikat, herzustellen.

Es ist als eigenständige, vorteilhafte Ausführung der Erfindung anzusehen, dass ein in einer ersten Stufe wie vorstehend beschriebenes silanmodifiziertes Silikat in einer zweiten Stufe durch weitere Reaktion mit einem Tetraalkoxysilan, z. B. Tetramethoxysilan, weiter modifiziert wird. Die weitere Modifikation des bereits silanmodifizierten Silikats erfolgt, um z. B. eine oder mehrere der folgenden Effekte zu erreichen: Das Molekulargewicht wird erhöht, die Vernetzungsdichte wird heraufgesetzt und/oder die Reaktivität wird erhöht. Die nachfolgende Hydrolyse mit einem Tetraalkoxysilan erfolgt unter denselben Bedingungen, wie sie im Zusammenhang mit der ersten Stufe der Silanmodifikation hier beschrieben ist.

Silan und Silikat werden in wässriger Lösung in folgenden Anteilen eingesetzt: Silan oder Siloxan können, bezogen auf die Gesamtmenge des zur Hydrolyse und/oder Kondensation eingesetzten Silikats und Silans, in einer Menge von 1 Gewichts-% bis 99 Gewichts-% eingesetzt werden. Allerdings zeigen bereits silanmodifizierte Silikatverbindungen, die nur geringe Mengen an Silan, z. B. bis zu 20 Gewichts-% aufweisen, einen deutlich verbesserten Korrosionsschutz. Gut geeignet sind silanmodifizierte Silikate, bei denen der Anteil des Silans 20 Gewichts-% oder mehr, bevorzugt zwischen 40 Gewichts-% und 60 Gewichts-% beträgt. Bei der Herstellung der silanmodifizierten Silikate werden Silan und Silikat jeweils vorteilhaft in einem Gewichts-Verhältnis von 0,1: 1 bis 2,5 : 1, bevorzugt von 0,4 bis 1:1 eingesetzt. Dabei kann das Silan als einzelne Verbindung oder als Mischung von Silanen eingesetzt werden, gleiches gilt für das Silikat, wobei der Einsatz von Lithiumsilikat bevorzugt wird, sowohl einzeln als auch in einer Silikatmischung. Der Feststoffgehalt der nach dem erfindungsgemäßen Verfahren erzeugten Passivierungszusammensetzung beträgt zwischen 1% und 70%. Vorteilhaft beträgt der Feststoffgehalt zwischen 1% und 50%, besonders vorteilhaft zwischen 2% und 40%.

Durch die gemeinsame Hydrolyse und Kondensation von Silikaten und Silanen bzw. Siloxanen in wässriger Lösung bei einem pH-Wert gleich oder größer 8 erfolgt zum einen die Ausbildung der silanmodifizierten bzw. siloxanmodifizierten Silikate. Die Hydrolyse kann ggf. nach dem Ansäuern auf einen pH-Wert gleich oder kleiner 7 fortgesetzt werden. Zum anderen können durch die werkseitig erfolgte alkalische und ggf. saure Hydrolyse frei werdende Alkohole entfernt werden, so dass wässrige saure Zusammensetzungen bereitgestellt werden können, die arm an flüchtigen organischen Verbindungen sind (VOC-arm) oder die frei von flüchtigen organischen Verbindungen sind (VOCfrei). Die durch die Hydrolyse frei werdenden Alkohole können beispielsweise durch Ultramembranfiltration oder Umkehrosmose, aber auch durch Destillation, z. B. Vakuumdestillation entfernt werden. Typische erfindungsgemäße wässrige alkalische oder angesäuerte Zusammensetzungen zum Passivieren von metallischen Substraten enthalten maximal 1 Gewichts-% Alkohol, bevorzugt maximal 0,3 Gewichts-% Alkohol. Das Entfernen des Alkohols fördert darüber hinaus auch die Hydrolyse- bzw. Kondensationsreaktion des Silans bzw. des Silans mit dem Silikat.

Die Hydrolyse und Kondensation im Alkalischen läuft in der Regel unter folgenden Bedingungen ab: Die Hydrolyse und Kondensation erfolgt bei Raumtemperatur, durch langsame Zugabe, meist über mehrere Stunden, maximal bis zu 12 Stunden, des Silans oder Silangemisches zum Silikat und unter ständigem Rühren. Nach Beendigung der Zugabe wird vorteilhaft noch einige Zeit weiter gerührt. Die Umsetzung kann über einen Zeitraum von 1 bis 48 Stunden erfolgen. Das weitere Rühren nach Abschluss der Hydrolyse bzw. Kondensation erfolgt ebenfalls über mindestens 1 Stunde, kann aber, z. B. zum Verbessern der Anwendungseigenschaften auch über bis zu 24 Stunden fortgesetzt werden.

Das Ansäuern erfolgt in der Regel ebenfalls bei Raumtemperatur. Der ganz oder teilweise hydrolysierten und/oder kondensierten Silikat-Silanmischung wird die Säure oder das Säuregemisch unter ständigem Rühren langsam zugegeben; auch das Ansäuern kann 1 bis 10 Stunden in Anspruch nehmen. Dabei wird ständig der pH-Wert kontrolliert und die Zugabe bei Erreichen des gewünschten pH-Wertes beendet. Auch nach dem Ansäuern wird vorteilhaft noch für einige Zeit 1 bis 24 Stunden weiter gerührt, um die Anwendungseigenschaften zu verbessern.

Alternativ ist es auch möglich, das alkalische Silan-Silikathydrolysat bis zu 6 Monate, vorteilhaft bis zu 3 Monate lagern zu lassen und erst dann anzusäuern. Es ist also möglich, die Produktion angesäuerter, ganz oder teilweise alkalisch hydrolysierter oder kondensierter silanmodifizierter Silikate insoweit zu entkoppeln, als das Ansäuern ohne Qualitätseinbuße zeitlich versetzt erfolgen kann. Es wird auch nach einer Lagerzeit von 3 oder 6 Monaten und erst anschließendem Ansäueren ein Hydrolysat bzw. Kondensat mit ausgezeichneten Korrosionsschutzeigenschaften erhalten.

Nach einer vorteilhaften Weiterbildung der Erfindung weist die Passivierungszusammensetzung eine oder mehrere Titanat- und/oder Zirkonatverbindungen auf. Die Titanat- und/oder Zirkonatverbindung kann mit dem Silan hydrolysiert bzw. kondensiert werden, entweder in Gegenwart des Silikats oder vorher in einer Reaktion nur zwischen dem Silan und der Titanat- und/oder Zirkonatverbindung. Wird die Titanat- und/oder Zirkonatverbindung vorab mit dem Silan oder Siloxan ganz oder teilweise hydrolysiert oder kondensiert, so kann dies z. B. erfolgen wie in der US 5,849,110 offenbart. Wird die Titanat- und/oder Zirkonatverbindung in Gegenwart des Silikats zugesetzt, kann dies entweder bereits in der alkalischen Hydrolyse oder erst nach dem Ansäuern geschehen. Zwar wird die Titanat- und/oder Zirkonatverbindung umso weniger in das silanmodifizierte Silikat-Grundgerüst eingebaut, je später es zugesetzt wird; die Einbindung ist also am geringsten, wenn die Titanat- und/oder Zirkonatverbindung erst nach dem Ansäuern der silanmodifizierten Silikatverbindung zugesetzt wird, zumal, wenn die Hydrolyse bzw. Kondensation zu diesem Zeitpunkt meist weitgehend abgeschlossen ist. Trotzdem ist auch bei spätem Zusatz von Titanaten oder Zirkonaten oder von Mischungen von Titanaten und/oder Zirkonaten eine Verbesserung der antikorrosiven Wirkung zu beobachten. Häufig liegt dann das Titanat und/oder Zirkonat in Form von Nanopartikeln vor.

Wird die Titanat- und/oder Zirkonatverbindung gleichzeitig mit dem Silan dem Silikat zugesetzt, so ist auch die Entstehung einer kovalenten Bindung zwischen der Titanat- und/oder Zirkonatverbindung und dem Silikat möglich, vergleichbar der kovalenten Bindung zwischen dem Silan und dem Silikat. Auch eine kovalente Bindung an am Silikat gebundene Silangruppen ist möglich und wird im Rahmen der Erfindung bevorzugt. Das resultierende Polymer weist also in Seitenketten in vereinfachter Darstellung die Strukturelemente "Wasserglas-Si-O-Ti-R" bzw. "Wasserglas-Si-O-Zr-R" auf, wobei gleiche Buchstaben die gleiche Bedeutung haben wie vorstehend ausgeführt und wobei Ti für Titan und Zr für Zirkonium steht.

Besonders geeignete Titanate und Zirkonate sind Monoalkyltrialkoxytitanate, Dialkyldialkoxytitanate, Trialkylmonoalkoxytitanate sowie Tetraalkoxytitanate wie z. B. Tetra-n-Butyltitanat, Titantriisostearoylisopropoxid, Isopropyltrioleyltitanat, Isopropyldimethacryl isostearoyltitanat, Titantris (dodecylbenzensulfonat)isopropoxid, Titantris (dioctylphosphato)- isopropoxid, Titanium trimethacrylat methoxyethoxyethoxid, tris(acrylato-O)(propan-2-olato)titanium, Titanium,bis[2-[(2-aminoethyl)amino-kN]-ethanolato-kO][2-[(2-aminoethyl)amino]-ethanolato-kO](2-propanolato), bis(dioctyl phosphato-O")[ethane-1,2-diolato(2-)-O,O']titanium sowie Di(dioctylpyrophosphato) ethylene titanate. Titan- und/oder Zirkoniumverbindungen können zur Herstellung der Passivierungszusammensetzung auch in Form von Komplexen oder Salzen zugesetzt werden.

Hierzu wird die Titanverbindung, die Zirkoniumverbindung oder Mischungen von Titan-, Zirkonium- oder von Titanat- und Zirkoniumverbindungen bei Raumtemperatur mit dem Silan gemischt. Dabei liegt der Anteil der Titan- und/oder Zirkoniumverbindungen, hierunter auch der Titanate und/oder Zirkonate, die jeweils einzeln oder in Mischung, bezogen auf die Gesamtmenge von Silan und Titan- sowie Zirkoniumverbindungen eingesetzt werden, zwischen 0,01 Gewichts-% und 50 Gewichts-%. Anschließen wird diese Mischung (typisch: Silan, Titanate, Zirkonate) in Lithiumpolysilikat oder ein anderes Silikat bzw. eine Mischung von Silikaten tropfenweise unter Rühren eingearbeitet, einige Zeit weiter gerührt und anschließend angesäuert. Alternativ kann die Zugabe der Titan- oder Zirkoniumverbindung, typisch: des Titanats, Zirkonats oder der Mischung dieser Zusätze nach dem Ansäuern bei Raumtemperatur erfolgen. Hierbei wird ebenfalls unter Rühren tropfenweise zu dosiert und anschließend noch 1 bis 24 Stunden weiter gerührt.

Die Durchführung des erfindungsgemäßen Verfahrens mit Mischungen von Silanen, Silanen und Titanaten und/oder Zirkonaten, aber auch mit Mischungen von Silikaten kann unter anderem zur Einstellung der Vernetzungsdichte der Passivierungsschicht dienen, die auf dem metallischen Substrat erzeugt wird. Die Vernetzungsdichte der Passivierungsschicht und ihre Stärke, die z. B. durch den Feststoffgehalt der Passivierungszusammensetzung beeinflusst werden kann, nehmen Einfluss auf die Korrosionseigenschaft der auf das metallische Substrat aufgebrachten und getrockneten Passivierung. Ein höher vernetzter Film kann auch mit geringerer Filmstärke guten Korrosionsschutz bieten. Zudem wird die Haftung der Passivierung am metallischen Substrat verbessert, insbesondere durch kovalente Anbindung der Passivierung an die OH-Gruppen der Oberfläche des metallischen Substrats. Die verbesserte Haftung an der Oberfläche des metallischen Substrats wird durch den Zusatz von Titanaten und/oder Zirkonaten möglicherweise unterstützt.

Mit den erfindungsgemäß hergestellten silanmodifizierten Silikatverbindungen wird eine saure wässrige Passivierungszusammensetzung hergestellt, die auf metallische Substrate aufgebracht wird. Die flüssige Passivierungszusammensetzung weist also zunächst Wasser, Säure und silanmodifizierte Silikatverbindungen auf. Sie kann aber auch Additive enthalten, die z. B. die Lagerstabilität, die Verarbeitungseigenschaften oder die antikorrosive Wirkung der aufgetragenen Beschichtung verbessern.

Diese Additive können sowohl während der alkalischen Hydrolyse als auch während oder nach dem Ansäuern zugesetzt werden. Besonders bevorzugt wird das Zusetzen von Additiven nach dem Ansäuern. Typische Additive sind Katalysatoren, Netzmittel, Korrosionsinhibitoren, Stabilisatoren sowie Entschäumer. Einzelne Additive werden nachfolgend in ihrer Wirkung in der erfindungsgemäßen Zusammensetzung näher erläutert:
Vorteilhaft werden Metall-Sauerstoff-Verbindungen der Metalle Strontium, Molybdän, Vanadium, Titanium, Zirkon, Mangan und/oder Wolfram in der wässrigen sauren Passivierungszusammensetzung als Korrosionsinhibitoren genutzt. Bevorzugt werden eine oder mehrere der nachfolgend aufgeführten Verbindungen in der wässrigen sauren Zusammensetzung eingesetzt: Salze oder Oxide der vorgenannten Metalle, Vanadate, Molybdate, Titanate, Zirkonate, Manganate, Salze und Oxide des Strontium und deren Polykondensate, insbesondere Kaliumorthovanadat, Kaliummetavanadat, Natriumorthovanadat, Natriummetavanadat, Natriumwolframat, Natriumparawolframat, Vanadylsulfat und Vanadiumpentoxid sowie Natriummolybdat und Kaliummolybdat. Es werden erfindungsgemäß Verbindungen der Metalle Molybdän, Vanadium und/oder Wolfram eingesetzt, die in der wässrigen, sauren Zusammensetzung zum Passivieren dissoziieren und dadurch Molybdän-, Vanadium- und/oder Wolframionen freisetzen. Molybdän-, Vanadium- und Wolframionen werden in die auf das metallische Substrat aufgebrachte Beschichtung eingebaut und bewirken den Aufbau eines sehr guten Korrosionsschutzes der Beschichtung.

Nach einer bevorzugten alternativen Zusammensetzung zur Passivierung von metallischem Substrat werden als oberflächenaktive Substanzen eine Phosphonsäure oder eine Mischung von Phosphonsäuren eingesetzt. Besonders bevorzugt werden organische Phosphonsäuren eingesetzt, zum Beispiel (1-Hydroxyethan-1,1-diyl) Biphosphonsäure, 2-Phosphonbutanel 1,2,4-tricarboxylsäure, Aminotrimethylenphosphonsäure, Ethylendiamintetramethylenphosphonsäure, Hexamethylendiamintetramethylenphsphonsäure, Hydroxyethylaminodimethylenphosphonsäure, 2-Phosphonobutan-1,2,3-tricarbon säure, Bishexamethylentriaminpentamethylenphosphonsäure oder Diethylentriaminpentamethylenphosphonsäure oder deren Mischungen.

Auch der Einsatz von Salzen der Phosphonsäure kann sich im Zusammenhang mit der Erfindung als vorteilhaft erweisen. Besonders geeignet sind die nachfolgend aufgeführten Phosphonate, jeweils einzeln oder auch in Mischung eingesetzt: Tetranatrium (1-Hydroxyethan-1,1-diyl) biphosphonat, Trinatrium (1-Hydroxy-ethan-1,1-diyl) biphosphonat, Pentanatrium-Ethylen diamintetramethylenphosphonat oder Heptanatrium-Diethylentriamin pentamethylenphosphonat. Diese Salze dissoziieren in der wässrigen, sauren Passivierungszusammensetzung, so dass die Phosphonate als oberflächenaktive Substanzen zur Verfügung stehen. Phosphonsäuren und deren Derivate können weiter vorteilhaft auch in Verbindung mit Vanadium- und Wolframverbindungen in sauren wässrigen Zusammensetzungen eingesetzt werden. Hier hat sich der Einsatz von Phosphonsäure oder Phosphonaten als oberflächenaktive Substanzen bewährt.

Der Zusatz von Phosphonaten ermöglicht ein schnelleres Ansäuern bzw. ein Ansäuern mit geringerem Einsatz an Säure. Insbesondere eine Kombination aus Phosphonaten und Phosphorsäure erweist sich als geeignet für die Herstellung von Passivierungszusammensetzungen mit guten Korrosionseigenschaften.

Im Rahmen des erfindungsgemäßen Verfahrens ist es bevorzugt, wenn die sauren wässrigen Passivierungszusammensetzungen für metallische Substrate eine oder mehrere Elemente oder Verbindungen der Gruppe aufweisen, die zwei-, drei- oder vierwertige Metallionen aufweist. Nach einer vorteilhaften, alternativen Ausführung der Erfindung wird eine Passivierungszusammensetzung bereitgestellt, die silanmodifizierte Silikate der vorstehend beschriebenen Zusammensetzung und zweiwertige, dreiwertige oder vierwertige Metallkationen aufweist oder eine Mischung solcher Metallkationen. Bevorzugt eingesetzt werden Kationen von Calcium, Magnesium, Zink, Mangan, Cobalt, Nickel, Chrom, Aluminium, Strontium, Barium, Gallium, Indium, Germanium, Zinn, Blei, As, Sb, Bismut, Selen, Tellur, Titan, Vanadium, Cer, Lanthan, Zirkonium, Molybdän, Scandium, Yttrium, Tantal, Eisen, Kupfer, Cadmium, und Wolfram oder Mischungen dieser Metallkationen. Besonders bevorzugt sind Aluminium und Eisen als dreiwertige Kationen und Magnesium, Zink und Mangan als zweiwertige Kationen. Die Metallkationen können auch als Salze von Säuren in die Passivierungszusammensetzung eingebracht werden, bevorzugt als Salze der zum Ansäuern verwendeten Säuren. Typisch können zum Beispiel Phosphonate oder Biphosphonate eingesetzt werden, die durch Auflösen der Metalle in Phosphorsäure erhalte werden. Bevorzugte Anionen bei Einsatz von Salzen der vorstehend genannten Elemente sind neben Phosphaten oder Phosphonaten Acetate, Chloride, Nitrate, Sulfate und Carbonate. Durch Zusatz dieser Elemente oder deren Verbindungen, bevorzugt deren Salze und Oxide, wird eine weitere Verbesserung der antikorrosiven Eigenschaften der erfindungsgemäßen Passivierung erreicht.

Da Silikate ausfallen, wenn Wassergläser mit zwei-, drei- oder vierwertigen Metallionen versetzt werden und da aus dieser Mischung gleichzeitig Metallhydroxide oder -oxide ausfallen, ist es für den Fachmann erstaunlich, dass die angesäuerte Passivierungszusammensetzung, die silanmodifizierte Silikate aufweist, ein gutes Lösevermögen für zwei- und dreiwertige Metallkationen aufweist.

Die erfindungsgemäßen wässrigen sauren Passivierungszusammensetzungen für metallische Substrate allgemein eignen sich für alle metallischen Oberflächen bzw. Substrate, jedoch besonders gut für Werkstücke mit einer Oberfläche aus Stahl, Eisen, Aluminium oder Zink, insbesondere aber auch für Werkstücke, deren Oberfläche mit einer Legierung von einem oder beiden der Metalle Aluminium und Zink mit weiteren Metallen versehen ist. Typisch sind beispielsweise geeignet eine Zink-Aluminium- legierung, eine Aluminium- oder eine Zinklegierung mit weiteren Metallen wie z. B. Eisen oder Magnesium, z. B. mit einer Zink-Eisen-Legierung, die sämtlich mit einer Korrosionsschutzbeschichtung versehen werden können. Die Schichtstärke der aufgetragenen Beschichtung aus Metall oder Legierung beträgt zwischen 5 µm und 100 µm. Die auf ein Substrat aufgebrachte metallische Legierung zeigt sich als diskrete Schicht. Wie vorstehend beschrieben können durch die erfindungsgemäße saure Passivierung Metallionen in die Passivierungsschicht eingelagert werden und z. B. als Zn/Fe-Silikat nachgewiesen werden. Typische Anwendungsfälle für eine wässrige saure Passivierungszusammensetzung, die eine silanmodifizierte Silikatverbindung aufweist, sind die Passivierung von elektrolytisch verzinktem Stückgut oder Massenschüttgut, insbesondere Schrauben und Stanzbiegeteile und das Coil-Coating, also das Passivieren von Bandstahl.

Die erfindungsgemäße Passivierungszusammensetzung kann als einzelne Beschichtung auf ein metallisches Substrat aufgetragen werden. Diese Passivierungszusammensetzung kann jedoch auch in Verbindung mit weiteren Beschichtungszusammensetzungen aufgetragen werden, beispielsweise kann die saure Passivierung gemäß dieser Erfindung mit einer alkalischen Passivierung überzogen werden.

Details des erfindungsgemäßen Verfahrens zum Herstellen eines silanmodifizierten Silikats werden nachfolgend an Hand von Ausführungsbeispielen näher erläutert.

Soweit nicht anders beschrieben, im Zusammenhang mit dieser Erfindung Mengenangaben oder Anteile von Komponenten stets auf 100 % Substanz und auf die in Tabelle 1 aufgeführte Gesamtzusammensetzung bezogen.

Tabelle 1 zeigt in der linken Spalte neben Wasser zunächst die im Zusammenhang mit den Ausführungsbeispielen eingesetzten Silane, in den Zeilen darunter sind besonders geeignete Silikate aufgeführt, die zur Durchführung der alkalischen Kondensation und Hydrolyse eingesetzt wurden. Es schließen sich in den Zeilen unterhalb verschiedene organische und anorganische Säuren an, die zum Ansäuern der ganz oder teilweise alkalisch hydrolysierten Silane bzw. Siloxane und silanmodifizierten Silikate eingesetzt werden. Abschließend sind Phosphonsäuren aufgeführt, die als oberflächenaktive Systeme eingesetzt werden. In zwei Fällen wird Natriumpermanganat eingesetzt.

Am Schluss der Tabelle sind Korrosionsinhibitoren, hier Vanadate, Vanadylsulfat, Wolframat und Molybdate aufgeführt, die in einzelnen Versuchen eingesetzt wurden.

Zur Herstellung der in Tabelle 1 aufgeführten, angesäuerten, alkalisch hydrolysierten und kondensierten silanmodifizierten Silikate ist festzuhalten, dass alle Verfahrensschritte jeweils bei Raumtemperatur durchgeführt wurden. Die Silikat-Komponente, also einzelne Silikate oder Mischungen von Silikaten, wurde vorgelegt. Es stellte sich ein pH-Wert zwischen 9 und 12 ein, also ein alkalischer pH-Wert, je nach Zusammensetzung der Silikat-Komponente. Die Silan-Komponente, also einzelne Silane oder Mischungen von Silanen, ggf. unter Zusatz von Titanaten oder Zirkonaten, wurde unter Rühren zugetropft. Das Zutropfen der Silan-Komponente erfolgte über einen Zeitraum von jeweils drei Stunden; nach vollständigem Zutropfen der Silan-Komponente wird noch einmal über drei Stunden weiter gerührt. Freigesetzter Alkohol wird mittels Destillation entfernt, so dass das Hydrolysat einen Alkoholgehalt von weniger als 0,3 Gewichts-% aufweist. Am Ende dieses Verfahrensschritts ist die Silankomponente weitgehend hydrolysiert und mit dem Silikat kondensiert, es ist aber nicht auszuschließen, dass noch eine im Verhältnis zur alkalischen Hydrolyse jedoch geringe Hydrolyse im sauren Milieu möglich ist. Es wurde festgestellt, dass es zur Herstellung einer Passivierungszusammensetzung mit guten Korrosionsschutzeigenschaften nicht erforderlich ist, dass die Hydrolyse im Alkalischen vollständig abläuft. Es ist auch möglich, die Hydrolyse nur teilweise im Alkalischen durchzuführen, z.B. zur Hälfte oder zu zwei Dritteln und dann im sauren Milieu zu Ende zu hydrolysieren.

Diesem alkalischen Hydrolysat wird anschließend die Säure-Komponente zugesetzt, wiederum unter Rühren über einen Zeitraum von drei Stunden. Angestrebt wird, durch Zusatz einer Säure oder einer Mischung von Säuren einen pH-Wert von gleich oder geringer als 4 einzustellen. Nach dem Erreichen des angestrebten pH-Werts von maximal 4 wird weitere drei Stunden gerührt. Die Referenzversuche mit einem durch alkalische Hydrolyse erzeugten silanmodifizierten Silikat, das ohne nachfolgendes Ansäuern eingesetzt wird und mit einem durch saure Hydrolyse und Kondensation erhaltenen silanmodifizierten Silikat wurde auf die gleiche Weise durch Hydrolyse bei Raumtemperatur erzeugt.

Die als Ergebnis dieses Herstellungsverfahrens erhaltene Passivierungszusammensetzung sowie Referenz-Zusammensetzungen werden jeweils auf schmelztauchverzinkte Stahlbleche (DC 54 Z 100) aufgerakelt und einem Salzsprühnebeltest gemäß DIN EN ISO 9227 unterzogen, wobei der erste sich bildende Weißrost bewertet wird. Pro Versuch wurden je 10 Bleche beschichtet; die Ergebnisse, die in Tabelle 1a-1c wiedergegeben sind, sind Mittelwerte. Die schmelztauchverzinkten Stahlbleche wurden vor dem Auftragen der Passivierungszusammensetzung gereinigt durch alkalisches Entfetten, anschließendes Spülen mit Säure und danach mit vollentsalztem Wasser. In der Auswertung orientiert sich die Bewertung der Versuche an dem Referenzversuch "Referenz 1" mit alkalisch hydrolysiertem Silan-Silikatkondensat. Das mit "Referenz 1" beschichtete Blech zeigte eine Beständigkeit gegen Weißrost von 48 Stunden. Versuchsergebnisse mit einer Weißrost-Beständigkeit von 24 Stunden bis 48 Stunden wurden als befriedigende Ergebnisse (o) bewertet, Versuchsergebnisse mit einer Weißrostbeständigkeit von mehr als 48 Stunden bis 72 Stunden wurden als gute Ergebnisse (+) bewertet und Versuchsergebnisse mit einer Weißrostbeständigkeit von mehr als 72 Stunden wurden als hervorragend (++) bewertet.

Für die alkalische Hydrolyse wurde die Silan-Komponente in einem Gewichts-Verhältnis zur Silikat-Komponente von 0,16 : 1 bis 2,1 : 1 eingesetzt. Die besten Korrosionsschutzergebnisse wurden erreicht, wenn ein Gewichts-Verhältnis zwischen Silan-Komponente und Silikat-Komponente von 0,4 : 1 und 1 : 1 eingestellt wurde.

Die Korrosionsinhibitoren wurden einzeln oder in Mischung zur Durchführung der in Tabelle 1 vorgestellten Versuche bereits während der alkalischen Hydrolyse in einer Menge von 0,1 Gewichts-% bis 5 Gewichts-% bezogen auf die Gesamtzusammensetzung zugesetzt. Sie können aber auch mit gleichwertiger Wirkung erst während oder nach dem Ansäuern zugesetzt werden.

Die oberflächenaktiven Substanzen werden während des Ansäuerns bezogen auf die Gesamtzusammensetzung in einer Menge von 0,1 Gewichts-% bis 2 Gewichts-% zugesetzt.

Die so hergestellten silanmodifizierten Silikate wurden durch Aufrakeln auf verzinkte Eisenbleche aufgetragen. Die getrocknete Schicht, die sich auf den verzinkten Eisenblechen nachweisen lässt, hat eine Schichtstärke von ca. 150 nm, sofern nichts anderes vermerkt ist.

Neben den Versuchen 1-30, die das erfindungsgemäße Verfahren umsetzen, wurde als Referenzversuch eine alkalische Hydrolyse von Silanen und Kondensation mit Silikaten ohne nachfolgendes Ansäuern durchgeführt. Auch die so erhaltenen silanmodifizierten Silikate wurden auf schmelzt auch verzinkte Eisenbleche aufgetragen und die verzinkten Eisenbleche, die mit erfindungsgemäß hergestellten silanmodifizierten Silikaten beschichten waren, wurden mit den Ergebnissen nach dem Stand der Technik verglichen. Es zeigt sich, dass mindestens gleichwertige Ergebnisse, überwiegend jedoch deutlich verbesserte, zum Teil hervorragende Korrosionsschutzwerte durch die erfindungsgemäßen alkalisch hydrolysierten und kondensierten sowie angesäuerten silanmodifizierten Silikate erreicht wurden.

Die Silan- und die Silikat-Komponente können nicht nur in Relation zueinander innerhalb eines weiten Anteilsbereichs eingesetzt werden. Auch der Anteil der Silan- und Silikatkomponente, der zum Herstellen der Passivierungszusammensetzung aus silanmodifizierten Silikaten eingesetzt wird, kann innerhalb sehr weiter Grenzen variiert und so auf vielfältige Anwendungsanforderungen eingestellt werden. Bemerkenswert ist, dass die Versuche mit geringem Anteil an Silan- und Silikatkomponente (Versuche 16-18) hervorragende Korrosionsschutzergebnisse liefern, und dies sogar ohne Einsatz von Korrosionsinhibitoren. Mit den Passivierungszusammensetzungen, die gemäß der Versuche 16-18 hergestellt wurden, können besonders dünne Beschichtungen von z. B. unter 150 nm hergestellt werden. Gerade bei den Rezepturen, die nur einen geringen Anteil der Silan- und Silikatkomponente -und damit einen geringen Feststoffgehalt von unter 5% aufweisen - zeigt sich die vorteilhafte Wirkung des Einsatzes von Phosphonsäure zum Ansäuern, z. B. im Vergleich der Versuche 13 und 21 mit den Versuchen 16-18.

Werden Beschichtungen mit größerer Schichtstärke gewünscht, so kann der Anteil von Silan- und Silikatkomponente an der Gesamtzusammensetzung auf bis zu 99% gesteigert werden. Versuch Nr. 28 zeigt für einen Anteil von jeweils 30 Gewichts-% Silan- und Silikatkomponente zufrieden stellende Korrosionsschutzergebnisse.

Sehr gute Korrosionsschutzergebnisse werden erreicht, wenn der Anteil der Silan- und Silikatkomponente an der Gesamtzusammensetzung zwischen 20 Gewichts-% und 40 Gewichts-%, insbesondere zwischen 30 Gewichts-% und 35 Gewichts-% beträgt (z. B. Versuche 6, 7, 10, 12). Der Feststoffgehalt der Passivierungszusammensetzung, die durch das erfindungsgemäße Verfahren erhalten wird, beträgt vorzugsweise zwischen 3% und 66%, besonders vorteilhaft zwischen 3,1% und 36%.

Mit Blick auf die eingesetzten Silikate ist festzustellen, dass Lithiumpolysilikat in der Regel gute und hervorragende Korrosionsschutzergebnisse bewirkt, anders als z. B. Natronwasserglas allein.

Unter den eingesetzten Säuren sind grundsätzlich organische Säuren genau so gut geeignet wie anorganische Säuren. Besonders gute bis hervorragende Korrosionsschutzergebnisse werden jedoch erreicht, wenn Phosphor- und/oder Phosphonsäure zugegeben wird. Hierzu ist anzumerken, dass die als Korrosionsinhibitoren genannten Phosphonsäuren bzw. Phosphonate ebenfalls zum Ansäuern der alkalisch hydrolysierten silanmodifizierten Silikate geeignet sind und bereits in geringen Mengen von 0,1 Gewichts-% und 1 Gewichts-% (siehe hierzu z. B. Versuch 3, 7, 15 und 20) geeignet, zufrieden stellende Korrosionsschutzergebnisse zu bewirken. Dies ist darauf zurückzuführen, dass Phosphonate oft noch saure Restfunktionalitäten aufweisen, die nach Zugabe der Phosphonate zum Herabsetzen des pH-Wertes führen.

**Tabelle 1a Rezepturen zur Herstellung silanmodifizierter Silikate, erhalten durch alkalische Hydrolyse bei einem pH-Wert zwischen 9 und 11 und anschließendes Ansäuern auf pH 4**

| **(Festkörper-)Anteil Komponente \ Variante** | **1** | **2** | **3** | **4** | **5** | **6** | **7** | **8** | **9** | **10** |
|---|---|---|---|---|---|---|---|---|---|---|
| Wasser | 48 | 53 | 59 | 54 | 65 | 61 | 64 | 72 | 75 | 68 |

| **Silan-Komponente** | | | | | | | | | | |
|---|---|---|---|---|---|---|---|---|---|---|
| Methacryloxymethyltriethoxy silan | | | | | 10 | | | | | |
| N-[3-(Trimethoxysilyl)propyl] ethylenediamin | | | | | | 5 | | | 7 | 15 |
| 3-Aminopropyltriethoxysilan | | 25 | | | | | | | | |
| Vinyltriethoxysilan | 30 | | | | | | | | 2 | |
| Vinyltrimethoxysilan | | | | 23 | | | | | | |
| Methyltrimethoxysilan | | | | | | 1 | | | | |
| 3-Mercaptopropyltrimethoxy silan | | | | | | | | 7 | | |
| CoatOSil MP 200 | | | 10 | | | | | | | |
| 3 Glycidyloxypropyltri methoxysilan | | | | | | | 10 | | | |
| 3-Aminopropylmethyldi ethoxysilan | | | | | | | | 3 | | |
| N-(2-aminoethyl)-3-amino propylmethyldimethoxysilan | | | | | | | | | 1 | |

| **Silikat- Komponente** | | | | | | | | | | |
|---|---|---|---|---|---|---|---|---|---|---|
| Lithiumpolysilikat (23 %-ig) | 21 | | | 19 | | | 23 | | | 15 |
| Natronwasserglas (30 %-ig) | | 20 | | | | 30 | | | 13 | |
| kolloidales Silikat (30 %-ig) | | | 30 | | 23 | | | 15 | | |

| **Säure** | | | | | | | | | | |
|---|---|---|---|---|---|---|---|---|---|---|
| Zitronensäure | | | | 2 | | | | | | |
| Oxalsäure | | | | | | | | | | 1 |
| Salicylsäure | | | | | | 2 | | | | |
| Bernsteinsäure | | | | | | | | 2 | | |
| HNO₃ 65%ig | 1 | | | | | | | | | |
| Schwefelsäure 95%ig | | 1 | | | | | | | | |
| Phosphorsäure 85%ig | | | | | | | 1 | | | |
| Phosphonsäure 50%ig | | | | | | | | | 1 | |

| **Korrosionsinhibitoren** | | | | | | | | | | |
|---|---|---|---|---|---|---|---|---|---|---|
| Natriumvanadat | | | | 1 | | | | | | |
| Kaliumvanadat | | | | | | | | | 1 | |
| Vanadylsulfat | | 1 | | | | | | | | |
| Natriumwolframat | | | | | | | 1 | | | |
| Natriumolybdat | | | | | | | 1 | | | |
| Kaliummolybdat | | | | | | | | 1 | | |

| **oberflächenaktive Substanzen** | | | | | | | | | | |
|---|---|---|---|---|---|---|---|---|---|---|
| 1-Hydroxyethan-1,1-diphosphonsäure | | | | | | 1 | | | | |
| Amino-tris (methylenphosphonsäure) | | | | | | | | | | |
| Ethylendiamin-tetra (methylenphosphonsäure) | | | | | 2 | | | | | |
| Diethylentriamin-penta (methylenphosphonsäure) | | | | 1 | | | | | | |
| Hexamethylendiamin -tetra (methylenphosphonsäure) | | | | | | | | | | |
| Hydroxyethyl-amino-di (methylenphosphonsäure) | | | | | | | | | | 1 |
| 2-Phosphonobutan-1,2,4-tricarbonsäure | | | 1 | | | | | | | |
| Bis (hexamethylentriaminpenta (methylenphosphonsäure)) | | | | | | | | | | |
| Natriumpermanganat | | | | | | | | | | |
| | | | | | | | | | | |
| Summe | 100 | 100 | 100 | 100 | 100 | 100 | 100 | 100 | 100 | 100 |
| | | | | | | | | | | |
| **Korrosionsschutzeigenschaften** | **0** | **0** | + | + | **0** | + | ++ | **0** | + | ++ |

**Tabelle 1b Rezepturen zur Herstellung silanmodifizierter Silikate, erhalten durch alkalische Hydrolyse bei einem pH-Wert zwischen 9 und 11 und anschließendes Ansäuern auf pH 4**

| **(Festkörper-)Anteil Komponente \ Variante** | **11** | **12** | **13** | **14** | **15** | **16** | **17** | **18** | **19** | **20** |
|---|---|---|---|---|---|---|---|---|---|---|
| Wasser | 94,8 | 67,5 | 96 | 96,9 | 97 | 93,9 | 93,5 | 93,5 | 59,9 | 77,9 |

| **Silan-Komponente** | | | | | | | | | | |
|---|---|---|---|---|---|---|---|---|---|---|
| Methacryloxymethyltriethoxysilan | | | | | | | | | | 1 |
| N-[3-(Trimethoxysilyl) propyl]ethylenediamin | | 20 | | | 1 | | 2 | | | |
| 3-Aminopropyltriethoxysilan | | | | | | | | | | |
| Vinyltriethoxysilan | 2 | | | | | | | | | |
| Vinyltrimethoxysilan | | 1 | | | | | | | | |
| Methyltrimethoxysilan | | | | | | 0,1 | | | | 0,1 |
| 3-Mercaptopropyltrimethoxysilan | | | | | | | | | | |
| CoatOSil MP 200 | 2 | | 1,5 | 1 | | | | 2 | 15 | 5 |
| 3-Glycidyloxypropyltrimethoxysilan | | | | | | | | | | |
| 3-Aminopropylmethyldiethoxysilan | | | | | | 2 | | | | |
| N-(2-aminoethyl)-3-aminopropylmethyldimethoxysilan | | | | | | | | | | |

| **Silikat-Komponente** | | | | | | | | | | |
|---|---|---|---|---|---|---|---|---|---|---|
| Lithiumpolysilikat (23 %-ig) | | 10 | | 1 | | 2 | 2,5 | 2 | 20 | |
| Natronwasserglas (30 %-ig) | | | | | | | | | | |
| kolloidales Silikat (30 %-ig) | | | 1,5 | | 1 | | | | | 15 |

| **Säure** | | | | | | | | | | |
|---|---|---|---|---|---|---|---|---|---|---|
| Zitronensäure | | | | | | | | | | |
| Oxalsäure | | | | | | | | | 5 | |
| Salicylsäure | | | | | | | | | | |
| Bernsteinsäure | | | | | | | | | | |
| HNO₃ 65%ig | 1 | | | | | | | | | |
| Schwefelsäure 95%ig | | | | | | 1 | | | | |
| Phosphorsäure 85%ig | | | 1 | | | | | | | |
| Phosphonsäure 50%ig | | 1,5 | | 1 | | | 2 | 1,5 | | |

| **Korrosionsinhibitor** | | | | | | | | | | |
|---|---|---|---|---|---|---|---|---|---|---|
| Natriumvanadat | | | | | | | | | | |
| Kaliumvanadat | | | | | | | | | | |
| Vanadylsulfat | 0,1 | | | 0,1 | | | | | | |
| Natriumwolframat | | | | | | | | | | |
| Natriumolybdat | | | | | | | | | | |
| Kaliummolybdat | | | | | | | | | | |

| **oberflächenaktive Substanzen** | | | | | | | | | | |
|---|---|---|---|---|---|---|---|---|---|---|
| 1-Hydroxyethan-1,1-diphosphonsäure | 0,1 | | | | 1 | 1 | | 1 | | |
| Amino-tris (methylenphosphonsäure) | | | | | | | | | | |
| Ethylendiamin-tetra (methylenphosphonsäure) | | | | | | | | | | |
| Diethylentriamin-penta (methylenphosphonsäure) | | | | | | | | | | |
| Hexamethylendiamin-tetra (methylenphosphonsäure) | | | | | | | | | | |
| Hydroxyethyl-amino-di(methylenphosphonsäure) | | | | | | | | | | |
| 2-Phosphonobutan-1,2,4-tricarbonsäure | | | | | | | | | | |
| Bis (hexamethylentriaminpenta (methylenphosphonsäure)) | | | | | | | | | | 1 |
| Natriumpermanganat | | | | | | | | | 0,1 | |
| | | | | | | | | | | |
| Summe | 100 | 100 | 100 | 100 | 100 | 100 | 100 | 100 | 100 | 100 |
| | | | | | | | | | | |
| **Korrosionsschutzeigenschaften** | + | ++ | **0** | ++ | **0** | + | ++ | ++ | + | **0** |

**Tabelle 1c Rezepturen zur Herstellung silanmodifizierter Silikate, erhalten durch alkalische Hydrolyse bei einem pH-Wert zwischen 9 und 11 und anschließendes Ansäuern auf pH 4**

| **(Festkörper-)Anteil Komponente \ Variante** | **21** | **22** | **23** | **24** | **25** | **26** | **27** | **28** | **29** | **30** | **Referenz 1** |
|---|---|---|---|---|---|---|---|---|---|---|---|
| Wasser | 95 | 85,5 | 84 | 76 | 74 | 67 | 83 | 34 | 57,3 | 64 | 79 |

| **Silan-Komponente** | | | | | | | | | | | |
|---|---|---|---|---|---|---|---|---|---|---|---|
| Methacryloxymethyltriethoxysilan | | | 5 | | | | | | | | |
| N- [3-(Trimethoxysilyl)propyl] ethylenediamin | | 2,5 | | | | | | 30 | | | 10 |
| 3-Aminopropyltriethoxysilan | | | | | | | | | | | |
| Vinyltriethoxysilan | | | | 10 | | | | | | | |
| Vinyltrimethoxysilan | | | | | | | | | | | |
| Methyltrimethoxysilan | | 1 | | | | | 1 | | | | |
| 3-Mercaptopropyltrimethoxysilan | | | | | | | | | | | |
| CoatOSil MP 200 | 1 | | | | | 5 | | | | 10 | 10 |
| 3-Glycidyloxypropyltrimethoxysilan | | | | | | | 5 | | 10 | | |
| 3-Aminopropylmethyldiethoxysilan | | | | | 10 | | | | | | |
| N-(2-aminoethyl)-3-amino propylmethyldimethoxysilan | | | | | | 1 | | | | | |

| **Silikat-Komponente** | | | | | | | | | | | |
|---|---|---|---|---|---|---|---|---|---|---|---|
| Lithiumpolysilikat (23 %-ig) | | 5 | 5 | | 10 | | 5 | 30 | 25 | 15 | |
| Natronwasserglas (30 %-ig) | | | | | | 22 | | | | 2 | |
| kolloidales Silikat (30 %-ig) | 2 | | | 10 | | | | | | 3 | |

| **Säure** | | | | | | | | | | | |
|---|---|---|---|---|---|---|---|---|---|---|---|
| Zitronensäure | | | | | | 2 | | | | | |
| Oxalsäure | | | | | | | 5 | | | | |
| Salicylsäure | | | | | | 2 | | | | | |
| Bernsteinsäure | | | | | 5 | | | | | | |
| HNO₃ 65%ig | 1 | | | | | | | 5 | | | |
| Schwefelsäure 95%ig | | | | | | | | | | | |
| Phosphorsäure 85%ig | | 5 | | 3 | | | | | 7,5 | | |
| Phosphonsäure 50%ig | | | 5 | | | | | | | 5 | |

| **Korrosionsinhibitor** | | | | | | | | | | | |
|---|---|---|---|---|---|---|---|---|---|---|---|
| Natriumvanadat | | 0,5 | | | | | | | | | |
| Kaliumvanadat | | | | | | | | | | | 1 |
| Vanadylsulfat | | | | | | | | | | 1 | |
| Natriumwolframat | | 0,5 | | | | | | | | | |
| Natriumolybdat | | | | | | | | | | | |
| Kaliummolybdat | | | | | | | | | | | |

| **oberflächenaktive Substanzen** | | | | | | | | | | | |
|---|---|---|---|---|---|---|---|---|---|---|---|
| 1-Hydroxyethan-1,1-diphosphonsäure | 1 | | | | | | | | | | |
| Amino-tris (methylen phosphonsäure) | | | 1 | | | | | | | | |
| Ethylendiamin-tetra (methylenphosphonsäure) | | | | | | | | 1 | | | |
| Diethylentriamin-pent a(methylenphosphonsäure) | | | | | | 1 | | | | | |
| Hexamethylendiamin -tetra (methylenphosphonsäure) | | | | 1 | | | | | | | |
| Hydroxyethyl-amino-di(methylenphosphonsäure) | | | | | | | | | | | |
| 2-Phosphonobutan-1,2,4-tricarbonsäure | | | | | 1 | | | | | | |
| Bis(hexamethylentriaminpent a(methylenphosphonsäure)) | | | | | | | 1 | | | | |
| Natriumpermanganat | | | | | | | | | 0,2 | | |
| | | | | | | | | | | | |
| Summe | 100 | 100 | 100 | 100 | 100 | 100 | 100 | 100 | 100 | 100 | 100 |
| | | | | | | | | | | | |
| **Korrosionsschutzeigenschaften** | **0** | + | ++ | **0** | + | **0** | + | **0** | ++ | ++ | **0** |

| | | | | | | | | | | | |
|---|---|---|---|---|---|---|---|---|---|---|---|
| Referenz 1: alkalisches Silan- Silikathydrolysat | | | | | | | | | | | |

Nach einem alternativen Ausführungsbeispiel wird die erfindungsgemäße Passivierungszusammensetzung hergestellt, indem zunächst GLYMO 3-glycidyloxypropyltrimethoxysilan (Evonik) und DAMO n-(2-Aminoethyl)-3 aminopropyltrimethoxysilan (Evonik); jeweils 100% Substanz, im Verhältnis 1:1 gemischt werden und 24 Stunden bei 30 °C unter Luftfeuchtigkeit oder gegebenenfalls Wasserzugabe (1%) gerührt wird. Das so erhaltene Oligomer bzw. Polymer auf Basis von Silanen wird erfindungsgemäß im Mengenverhältnis 30 : 70 Oligomer : Silikat, bezogen auf den Silikatfeststoff, zugegeben. Für das vorliegende Ausführungsbeispiel wird Lithiumpolysilikat mit 23 % Feststoff eingesetzt. Das bei der Hydrolyse bzw. Kondensation entstehende Methanol wird abdestilliert, nach Abschluss der Hydrolyse bzw. Kondensation wird erfindungsgemäß durch Zugabe von Säure bzw. Salzen ein pH-Wert von 4 eingestellt. Für das vorliegende Ausführungsbeispiel wird HEDP (1-Hydroxyethan-(1-1-diphosphonsäure)) eingesetzt.

## Patentansprüche

1. Passivierungszusammensetzung für ein metallisches Substrat, aufweisend eine im alkalischen pH-Bereich silanmodifizierte Silikatverbindung in saurer wässriger Lösung, erhältlich durch
- mindestens teilweises Hydrolysieren und/oder Kondensieren mindestens eines Silans in Gegenwart mindestens eines Silikats bei einem pH-Wert gleich oder größer 8, anschließend
- Einstellen eines pH-Werts gleich oder kleiner 7 durch Zugeben von Säure.

2. Passivierungszusammensetzung nach Anspruch 1, aufweisend eine anorganische oder eine organische Säure oder eine Mischung von Säuren.

3. Passivierungszusammensetzung nach Anspruch 1 oder 2, aufweisend eine organische oder anorganische, Phosphor enthaltende Säure oder eine Mischung solcher Phosphor enthaltender Säuren.

4. Passivierungszusammensetzung nach mindestens einem der vorstehenden Ansprüche, wobei die Passivierungszusammensetzung auf einen pH-Wert zwischen 2 und 5 eingestellt ist.

5. Passivierungszusammensetzung nach mindestens einem der vorstehenden Ansprüche, wobei mindestens 20 Gewichts-% des eingesetzten Silans kovalent an das Silikat gebunden sind.

6. Passivierungszusammensetzung nach mindestens einem der vorstehenden Ansprüche, aufweisend Lithiumpolysilikat, ein Natrium-, Kalium oder NH₄ Wasserglas als Silikatverbindung, einzeln oder in Mischung miteinander oder mit einem anderen Silikat.

7. Passivierungszusammensetzung nach mindestens einem der vorangehenden Ansprüche 1 bis 4, **dadurch gekennzeichnet, dass** ein Silan eingesetzt wird, das mindestens eine Bindung zwischen einem Silizium- und einem Kohlenstoffatom (Si-C-Bindung) aufweist.

8. Passivierungszusammensetzung nach mindestens einem der vorstehenden Ansprüche, aufweisend ein epoxyfunktionelles, ein vinylfunktionelles, ein aminofunktionelles, acrylfunktionelles, harnstofffunktionelles oder thiolfunktionelles Silan, einzeln oder in Mischung, mindestens teilweise in kovalenter Bindung an das mindestens eine Silikat.

9. Passivierungszusammensetzung nach mindestens einem der vorstehenden Ansprüche, aufweisend eine Titanverbindung oder eine Zirkoniumverbindung oder eine Mischung dieser Verbindungen.

10. Passivierungszusammensetzung nach Anspruch 9, wobei die Titan- und/oder die Zirkoniumverbindung mindestens teilweise an ein Silan angebunden ist, wobei das Silan in kovalenter Bindung an ein Silikat gebunden ist.

11. Passivierungszusammensetzung nach mindestens einem der vorstehenden Ansprüche, aufweisend 2-, 3- oder 4-wertige Metallkationen, einzeln oder in Mischung.

12. Passivierungszusammensetzung nach mindestens einem der vorstehenden Ansprüche, aufweisend anionische Verbindungen von Vanadium, Molybdän und Wolfram, einzeln oder in Mischung, insbesondere ausgewählt aus der Gruppe, die umfasst Vanadate, Molybdate, Wolframate und deren Polykondensate.

13. Passivierungszusammensetzung nach mindestens einem der vorstehenden Ansprüche, aufweisend einen Alkoholgehalt von weniger als 5 Gewichts-%, bevorzugt von weniger als 0,3 Gewichts-%.

14. Verfahren zur Herstellung eines silanmodifizierten Silikats mit den Schritten
- mindestens teilweises Hydrolysieren und/oder Kondensieren mindestens eines Silans in Gegenwart mindestens eines Silikats bei einem pH-Wert gleich oder größer 8, anschließend
- Einstellen eines pH-Werts gleich oder kleiner 7 durch Zugeben von Säure.

15. Verfahren nach Anspruch 14, **dadurch gekennzeichnet, dass** die Hydrolyse und/oder Kondensation des Silans in Gegenwart des Silikats nach dem Einstellen des pH-Werts auf gleich oder kleiner 7 fortgesetzt wird.

16. Metallisches Substrat, beschichtet mit, einer Passivierungszusammensetzung, aufweisend eine getrocknete, im alkalischen pH-Bereich silanmodifizierte Silikatverbindung, die in saurer, wässriger Lösung aufgetragen wird.

17. Metallisches Substrat nach Anspruch 16 aufweisend eine Schichtdicke der Beschichtung von 1 nm bis 550 nm.

18. Metallisches Substrat nach Anspruch 16 oder 17, aufweisend mindestens eine weitere Beschichtung, insbesondere eine alkalische Passivierung.

## Claims

1. A passivation composition for a metallic substrate, comprising a silicate compound, silane-modified in an alkaline pH, in acidic aqueous solution, obtainable by
- at least partially hydrolysing and/or condensing at least one silane in the presence of at least one silicate at a pH equal to or greater than 8, followed by
- adjusting a pH equal to equal to or less than 7 by adding acid.

2. The passivating composition according to claim 1, comprising an inorganic or an organic acid or a mixture of acids.

3. The passivating composition according to claim 1 or 2, comprising an organic or inorganic phosphorus-containing acid or a mixture of such phosphorus-containing acids.

4. The passivating composition according at least one of the preceding claims, wherein the passivating composition is adjusted to a pH between 2 and 5.

5. The passivating composition according at least one of the preceding claims, wherein at least 20% by weight of the silane used is covalently bonded to the silicate.

6. The passivating composition according at least one of the preceding claims, comprising lithium polysilicate, a sodium, potassium, or NH₄ soluble glass as the silicate compound, individually or in admixture with each other or with another silicate.

7. The passivating composition according to at least one of the preceding claims 1 to 4, **characterized in that** a silane is used that has at least one bond between a silicon and a carbon atom (Si-C bond).

8. The passivating composition according at least one of the preceding claims, comprising an epoxy functional, a vinyl-functional, an amino-functional, acrylic-functional, urea-functional, or thiol-functional silane, individually or in admixture, at least partially covalently bonded to the at least one silicate.

9. The passivating composition according at least one of the preceding claims, comprising a titanium compound or a zirconium compound or a mixture of these compounds.

10. The passivating composition of claim 9, wherein the titanium and/or zirconium compound is at least partially attached to a silane, wherein the silane is covalently bonded to a silicate.

11. The passivation composition according to at least one of the preceding claims, comprising 2-, 3-, or 4-valent metal cations, individually or in admixture.

12. The passivating composition according to at least one of the preceding claims, comprising anionic compounds of vanadium, molybdenum, and tungsten, individually or in admixture, in particular selected from the group, comprising vanadates, molybdate, tungstates, and their polycondensates.

13. The passivating composition according to at least one of the preceding claims, having an alcohol content of less than 5% by weight, preferably of less than 0.3% by weight.

14. A method of producing a silane-modified silicate, having the steps of
- at least partially hydrolysing and/or condensing at least one silane in the presence of at least one silicate at a pH equal to or greater than 8, followed by
- adjusting a pH equal to equal to or less than 7 by adding acid.

15. The method according to claim 14, **characterized in that** the hydrolysis and/or condensation of the silane in the presence of the silicate is continued after adjusting the pH to equal to or less than 7.

16. A metallic substrate coated with a passivating composition, comprising a dried silicate compound, silane-modified in alkaline pH, which is applied in acidic aqueous solution.

17. The metallic substrate according to claim 16, having a layer thickness of the coating of 1 nm to 550 nm.

18. The metallic substrate according to claim 16 or 17, comprising at least one further coating, in particular an alkaline passivation.

## Revendications

1. Composition de passivation pour un substrat métallique, comportant un composé de silicate en solution aqueuse acide, modifié par un silane dans l'intervalle de pH alcalin, pouvant être obtenue par
- hydrolyse et/ou condensation au moins partielle d'au moins un silane en présence d'au moins un silicate à un pH supérieur ou égal à 8, puis
- ajustement d'un pH inférieur ou égal à 7 par addition d'acide.

2. Composition de passivation selon la revendication 1, comportant un acide organique ou inorganique ou un mélange d'acides.

3. Composition de passivation selon la revendication 1 ou 2, comportant un acide organique ou inorganique, contenant du phosphore, ou un mélange de tels acides contenant du phosphore.

4. Composition de passivation selon au moins l'une quelconque des revendications précédentes, la composition de passivation étant ajustée à un pH compris entre 2 et 5.

5. Composition de passivation selon au moins l'une quelconque des revendications précédentes, dans laquelle au moins 20 % en poids du silane utilisé sont liés par covalence au silicate.

6. Composition de passivation selon au moins l'une quelconque des revendications précédentes, comportant, en tant que composé de silicate, du polysilicate de lithium, un silicate de sodium, potassium ou NH₄, seuls ou mélangés entre eux ou avec un autre silicate.

7. Composition de passivation selon au moins l'une quelconque des revendications précédentes 1 à 4, **caractérisée en ce qu'**on utilise un silane qui comporte au moins une liaison entre un atome de silicium et un atome de carbone (liaison Si-C).

8. Composition de passivation selon au moins l'une quelconque des revendications précédentes, comportant un silane à fonction époxy, un silane à fonction vinyle, un silane à fonction amino, à fonction acrylique, à fonction urée ou à fonction thiol, seuls ou mélangés, au moins en partie en liaison covalente, audit au moins un silicate.

9. Composition de passivation selon au moins l'une quelconque des revendications précédentes, comportant un composé de titane ou un composé de zirconium ou un mélange de ces composés.

10. Composition de passivation selon la revendication 9, dans laquelle le composé de titane et/ou le composé de zirconium est/sont au moins en partie lié(s) à un silane, le silane étant lié en liaison covalente à un silicate.

11. Composition de passivation selon au moins l'une quelconque des revendications précédentes, comportant des cations métalliques di-, tri- ou tétravalents, seuls ou mélangés.

12. Composition de passivation selon au moins l'une quelconque des revendications précédentes, comportant des composés anioniques de vanadium, molybdène et tungstène, seuls ou mélangés, en particulier choisis dans le groupe qui comprend les vanadates, molybdates, tungstates et leurs produits de polycondensation.

13. Composition de passivation selon au moins l'une quelconque des revendications précédentes, présentant une teneur en alcool de moins de 5 % en poids, de préférence de moins de 0,3 % en poids.

14. Procédé pour la préparation d'un silicate modifié par un silane, comportant les étapes
- d'hydrolyse et/ou de condensation au moins partielle d'au moins un silane en présence d'au moins un silicate à un pH supérieur ou égal à 8, puis
- d'ajustement d'un pH inférieur ou égal à 7 par addition d'acide.

15. Procédé selon la revendication 14, **caractérisé en ce que** l'hydrolyse et/ou la condensation du silane en présence du silicate est/sont poursuivie(s) après l'ajustement du pH à une valeur inférieure ou égale à 7.

16. Substrat métallique, revêtu d'une composition de passivation, comportant un composé de silicate séché, modifié par un silane dans l'intervalle de pH alcalin, qui est appliquée en solution aqueuse acide.

17. Substrat métallique selon la revendication 16, présentant une épaisseur de couche du revêtement de 1 nm à 550 nm.

18. Substrat métallique selon la revendication 16 ou 17, comportant au moins un autre revêtement, en particulier une passivation alcaline.
